# EUROPEAN PATENT SPECIFICATION

(11) **EP 3 849 772 B1**
(45) Date of publication and mention of the grant of the patent: **20.12.2023**
(21) Application number: 19773248.0
(22) Date of filing: 06.09.2019
(51) Int. Cl.: B29C 45/77

(54) **METHODS FOR CONTROLLING INJECTION MOLDING PROCESSES BASED ON ACTUAL PLASTIC MELT PRESSURE OR CAVITY PRESSURE**
VERFAHREN ZUR STEUERUNG VON SPRITZGIESSPROZESSEN AUF BASIS VON TATSÄCHLICHEM KUNSTSTOFFSCHMELZDRUCK ODER HOHLRAUMDRUCK
PROCÉDÉS POUR COMMANDER DES PROCESSUS DE MOULAGE PAR INJECTION REPOSANT SUR LA PRESSION RÉELLE D'UNE MATIÈRE PLASTIQUE FONDUE OU LA PRESSION DE CAVITÉ

(30) Priority: 13.09.2018 US 201862730597 P
(43) Date of publication of application: 21.07.2021
(73) Proprietor: iMFLUX Inc., Hamilton, OH 45015 (US)
(72) Inventor: COLLINS, Bryler, Milford, OH 45150 (US); LAWLESS, William, Francis, III, Medford, MA 02155 (US); ALTONEN, Gene, Michael, West Chester, OH 45069 (US); HUANG, Chow-Chi, West Chester, OH 45069 (US)
(74) Representative: Hoyng Rokh Monegier B.V.
(86) International application number: PCT/US2019/049842
(87) International publication number: WO 2020/055668

(56) References cited:
- EP-A1- 3 027 382
- WO-A1-2017/144344
- US-A- 3 840 312
- US-A- 4 060 362
- US-A- 5 945 046
- US-A1- 2016 229 101
- US-A1- 2017 031 330
- HUTCHINSON H R: "IN-PROCESS CONTROL OF INJECTION VISCOSITY", MODERN PLASTICS, MCGRAW-HILL,INC. LAUSANNE, CH, vol. 47, no. 10, 1 October 1970 (1970-10-01), XP001173918, ISSN: 0026-8275

## Description

### FIELD OF THE DISCLOSURE

The present disclosure relates generally to injection molding and, more particularly, to approaches for controlling injection molding machines using actual plastic melt pressure or cavity pressure rather than a calculated plastic melt pressure or injection pressure.

### BACKGROUND

Injection molding is a technology commonly used for high-volume manufacturing of parts constructed of thermoplastic materials. During repetitive injection molding processes, a thermoplastic resin, typically in the form of small pellets or beads, is introduced into an injection molding machine which melts the pellets under heat, pressure and shear. In an injection molding cycle, the molten thermoplastic material is forcefully injected into a mold cavity having a particular desired cavity shape. The injected plastic is held under pressure in the mold cavity and is subsequently cooled and removed as a solidified part having a shape closely resembling the cavity shape of the mold. A single mold may have any number of individual cavities which can be connected to a flow channel by a gate that directs the flow of the molten resin into the cavity. A typical injection molding procedure generally includes four basic operations: (1) heating the plastic in the injection molding machine to allow the plastic to flow under pressure; (2) injecting the melted plastic into a mold cavity or cavities defined between two mold halves that have been closed; (3) allowing the plastic to cool and harden in the cavity or cavities while under pressure; and (4) opening the mold halves and ejecting the part from the mold. Upon ejecting the part from the mold, the device that injects the melted plastic into the mold cavity or cavities (e.g., a screw or an auger) enters a recovery phase in which it returns to an original position.

In these systems, a control system controls the injection molding process according to an injection cycle that defines a series of control values for the various components of the injection molding machine. For example, the injection cycle can be driven by a fixed and/or a variable melt pressure profile wherein the controller uses, for example, an estimated melt pressure based on the injection pressure. The injection cycle may also be controlled by a fixed or variable screw velocity profile wherein the control senses the velocity of the injection screw as input for determining the driving speed applied to the material.

In a conventional injection molding process, there are two phases associated with the filling of the mold. The first is usually referred to as the "fill" phase and is controlled by a screw velocity setpoint(s). Most injection molding machines routinely use between 1-3 velocity setpoints, but machines may allow for up to 10 velocity setpoints during the "fill" phase. The velocity setpoints must be manually entered by the machine operator. Once the plastic part has been filled up to a certain percentage, there is a transfer of the machine control from velocity control to pressure control. The pressure control phase of filling out the part is referred to as the "hold" phase. In some cases, the terms "pack" and "hold" are both used to describe the pressure control phase. Most injection molding machines routinely use between 1-3 pressure setpoints during the "hold" phase, but machines may allow for up to 10 pressure setpoints during the "hold" phase. The pressure setpoints are manually entered by the machine operator.

The injection molding process may vary depending on the type of injection molding being performed. For example, constant low pressure multi-cavity injection molding systems have been developed that inject the molten plastic material into the mold cavity at a substantially constant low pressure, typically less than 6,000 psi, for a single time period or phase. Other injection molding processes include metal injection molding (MIM), reaction injection molding (RIM), liquid injection molding (LIM), structural foam molding, liquid crystal polymer (LCP) molding, and injection-stretch blow molding.

Throughout injection of plastic in an injection molding process, the typical proxy that is used by the injection molding machine for melt pressure is an injection pressure. The injection pressure is typically either the hydraulic pressure exerted on the back of an injection piston or the amount of force exerted on a load cell on the back of a screw. A calculation is made to approximate what the actual plastic melt pressure is at the front of the screw during injection by comparing the difference in area between where the force or pressure is being measured and the area of the screw tip that is exerted on the molten thermoplastic material. The calculation that is used depends on whether the machine injection is controlled hydraulically or electrically. This method of calculating actual melt pressure can be compromised by the variation in geometry at the front of the screw tip, as well as variation due to pressure drop based on one or more of the following; clearance between screw and barrel, screw check ring performance, and the geometry of additional components such as mixers or extended nozzles.

US2016229101A1 recites a method for qualitatively and/or quantitatively classifying injection-molding tools in tool categories and determining preferred intervention ranges and/or manipulated variables for adapting injection-molding machine parameters in the case of changing ambient conditions and/or determining the influence of disturbing effects on the injection-molding process.

US3840312A recites a dynamic pressure control system particularly adapted for use in molding machines and casting machines of the type capable of operating in cycles, for controlling cavity pressure in the mold cavity of the mold of the machine during each cycle of machine operation.

EP3027382A1 recites a method and a machine account for changes in material properties of molten plastic material during an injection run. A change in a control signal is calculated by a controller during the injection molding run. If the change in the control signal indicates a change in material flowability, the controller alters a target injection pressure to ensure that molten plastic material completely fills and packs a mold cavity to prevent part flaws such as short shots or flashing.

US 4,060,362 is directed to a combined same cycle and subsequent cycle control of an injection molding machine. Mold cavity pressure readings are accumulated and averaged during an initial cycle portion to generate a sensed average value which is compared to a setpoint reference to test for an error.

US 2017/031330 A1 recites an injection molding system including a state observation section observing when in injection molding is performed.

### SUMMARY

While the invention is defined in the independent claims, further aspects of the invention are set forth in the dependent claims, the drawings and the following description.

Arrangements within the scope of the present disclosure are directed to the control of an injection molding process to produce repeatably consistent parts by using an actual melt pressure. The use of a pressure transducer at or near a nozzle tip of the injection unit gives a much more accurate measurement of what the actual plastic melt pressure is of the plastic material that is entering the mold during the fill, pack or hold phases of the injection molding cycle than the injection pressure currently being used as a proxy. In other words, control of an injection molding cycle using an injection pressure (such as a hydraulic or electric pressure) will yield varying actual plastic melt pressure for most of the pack and hold phase, which will result in parts of reduced quality and consistency, whereas control of an injection molding cycle using an actual melt pressure will result in parts of increased quality and consistency.

Specifically, a method for controlling an injection molding process based upon an actual plastic melt pressure includes injecting molten thermoplastic material into a mold cavity during a baseline cycle. The method further includes measuring, using a sensor in or near a nozzle, a pressure of the molten thermoplastic material during the baseline cycle, and tracking, by a controller, the measured pressure of the molten thermoplastic material over time during the baseline cycle. The method includes identifying, by the controller, an optimal actual plastic melt pressure curve over time based on the baseline cycle. The method then includes injecting molten thermoplastic material into the mold cavity during a subsequent cycle and monitoring, using the sensor in or near the nozzle, the pressure of the molten thermoplastic material during the subsequent cycle. The method then includes adjusting, by the controller, an injection pressure in order to cause the monitored pressure of the molten thermoplastic material during the subsequent cycle to follow the optimal actual plastic melt pressure curve over time.

The method for controlling an injection molding process based upon an actual plastic melt pressure may be used in a conventional injection molding process or in a substantially low constant pressure injection molding process. The method may also be used in other molding processes, such as metal injection molding (MIM), reaction injection molding (RIM), liquid injection molding (LIM), structural foam molding, liquid crystal polymer (LCP) molding, and injection-stretch blow molding. In a conventional injection molding process, adjusting the injection pressure in order to cause the monitored pressure of the molten thermoplastic material during the subsequent cycle to follow the optimal actual plastic melt pressure curve over time may occur during at least one of a packing or a holding phase of the subsequent cycle. In a substantially low constant pressure injection molding process, adjusting the injection pressure in order to cause the monitored pressure of the molten thermoplastic material during the subsequent cycle to follow the optimal actual plastic melt pressure curve over time may occur during all of the subsequent cycle.

The method for controlling an injection molding process based upon an actual plastic melt pressure may also include applying a machine learning algorithm to determine an alteration to the optimal actual plastic melt pressure curve. For example, in some implementations, performance of a plurality of injection cycles is monitored for a plurality of different injection molding machines, mold, and molten materials. This historical data can be used as an input to train the machine learning algorithm to correlate the characteristics of the injection molding machine, mold, and/or molten material, the optimal actual plastic melt pressure curve used with such machines, molds, and/or molten materials, and a measured result (such as part quality), and then implement an alteration to the optimal actual plastic melt pressure curve for such a machine, mold, and/or molten material that will result in an improved measured result.

Arrangements within the scope of the present disclosure are also directed to the control of injection molding processes to produce repeatably consistent parts by using a cavity pressure. The cavity pressure value can be obtained through a cavity pressure sensor within a mold cavity. Alternately, the cavity pressure can be determined by a virtual cavity pressure reading, as described in co-owned US Patent Application No. 62/661,901, "Systems and Methods for Controlling Injection Molding using Predicted Cavity Pressure,". Using cavity pressure, actual or calculated, to adjust a plastic melt pressure profile during packing and holding of the plastic part allows for more accuracy and repeatability of critical requirements than using an injection pressure. The cavity pressure can be used as part of a control algorithm that includes a variable referred to as a process factor in this disclosure. The process factor is used in conjunction with the cavity pressure to adjust a plastic melt pressure setpoint. In other words, if the cavity pressure starts to increase, the plastic melt pressure setpoint will decrease or increase by an amount calculated by the algorithm using a process factor determined during initial process development. The process factor is part and material dependent. This method of controlling plastic melt pressure during an injection molding cycle is more reliable than simply using a static plastic melt pressure setpoint because it compensates for changes in viscosity more effectively.

Specifically, a method for controlling an injection molding process based upon a plastic melt pressure setpoint adjusted using a cavity pressure includes setting, by a controller, an actual plastic melt pressure setpoint, and injecting molten thermoplastic material into a mold cavity. The method includes determining, by a calculation performed by the controller or directly by a sensor in or near the mold cavity, a cavity pressure, and multiplying, by the controller, the cavity pressure by a process factor to calculate an adjustment amount. The method then includes adding or subtracting, by the controller, the adjustment amount from the actual plastic melt pressure setpoint to compute an adjusted setpoint. The method includes monitoring, using a sensor in or near a nozzle, a pressure of the molten thermoplastic material, and adjusting, by the controller, an injection pressure in order to cause the monitored pressure of the molten thermoplastic material to equal the adjusted setpoint.

In the method, the process factor may be equal to 0. Alternately, the process factor may be less than 0. As yet another option, the process factor may be greater than 0.

The method for controlling an injection molding process based upon a plastic melt pressure setpoint adjusted using a cavity pressure may be used in a conventional injection molding process or in a substantially low constant pressure injection molding process. The method may also be used in other molding processes, such as metal injection molding (MIM), reaction injection molding (RIM), liquid injection molding (LIM), structural foam molding, liquid crystal polymer (LCP) molding, and injection-stretch blow molding. In a conventional injection molding process, adjusting an injection pressure in order to cause the monitored pressure of the molten thermoplastic material to equal the adjusted setpoint may occur during a at least one of packing or a holding phase of the subsequent cycle. In a substantially low constant pressure injection molding process, adjusting an injection pressure in order to cause the monitored pressure of the molten thermoplastic material to equal the adjusted setpoint may occur during all of the subsequent cycle.

The method for controlling an injection molding process based upon a plastic melt pressure setpoint adjusted using a cavity pressure may also include applying a machine learning algorithm to determine the process factor. For example, in some implementations, performance of a plurality of injection cycles is monitored for a plurality of different injection molding machines, mold, and molten materials. This historical data can be used as an input to train the machine learning algorithm to correlate the characteristics of the injection molding machine, mold, and/or molten material, the performance factor used with such machines, molds, and/or molten materials, and a measured result (such as part quality), and then determine an optimized process factor for such a machine, mold, and/or molten material that will result in an improved measured result.

Additionally, controlling the injection molding process using a real time cavity pressure provides significant benefits over controlling the injection molding process using 3, or even 10, manually entered velocity or pressure setpoints as is currently done. A method for controlling an injection molding process using real time cavity pressure includes injecting molten thermoplastic material into a mold cavity during a baseline cycle and determining, by a calculation performed by a controller or directly by a sensor in or near the mold cavity, a cavity pressure during the baseline cycle. The method includes tracking, by the controller, the cavity pressure over time during the baseline cycle, and identifying, by the controller, an optimal cavity pressure curve over time based on the baseline cycle. The method then includes injecting molten thermoplastic material into the mold cavity during a subsequent cycle, and monitoring, by the calculation performed by the controller or directly by the sensor in or near the mold cavity, a cavity pressure during the subsequent cycle. The method finally includes adjusting, by the controller, an injection pressure in order to cause the monitored cavity pressure to follow the optimal cavity pressure curve over time.

The method for controlling an injection molding process using a real time cavity pressure may be used in a conventional injection molding process or in a substantially low constant pressure injection molding process. The method may also be used in other molding processes, such as metal injection molding (MIM), reaction injection molding (RIM), liquid injection molding (LIM), structural foam molding, liquid crystal polymer (LCP) molding, and injection-stretch blow molding. In a conventional injection molding process, adjusting, by the controller, the injection pressure in order to cause the monitored cavity pressure to follow the optimal cavity pressure curve over time may occur during at least one of a packing or a holding phase of the subsequent cycle. In a substantially low constant pressure injection molding process, adjusting, by the controller, the injection pressure in order to cause the monitored cavity pressure to follow the optimal cavity pressure curve over time may occur during all of the subsequent cycle.

### BRIEF DESCRIPTION OF THE DRAWINGS

FIG. 1 illustrates a schematic view of an injection molding machine having a controller coupled thereto in accordance with various embodiments of the present disclosure;
FIG. 2 illustrates a graphical example of a conventional injection molding process of the prior art where the injection pressure is used to calculate an estimated plastic melt pressure, which ultimately diverges from the actual plastic melt pressure;
FIG. 3 illustrates a graphical example comparing a conventional injection molding process where an actual plastic melt pressure is used to control the process, resulting in a fluctuation in the injection pressure, with a conventional injection molding process where the injection pressure is used to control the process, resulting in a fluctuation in the actual plastic melt pressure (and consequently resulting in reduced part quality and consistency);
FIG. 4 illustrates a graphical example illustrating the difference between a substantially low constant pressure injection molding process where an actual plastic melt pressure is used to control the process with a substantially low constant pressure injection molding process where a calculated plastic melt pressure based on the injection pressure is used to control the process;
FIG. 5 illustrates a graphical example of a substantially low constant pressure injection molding process controlled based upon a plastic melt pressure setpoint adjusted using a cavity pressure and a process factor;
FIG. 6 illustrates a graphical example of various substantially low constant pressure injection molding processes controlled based upon a plastic melt pressure setpint adjusted using a cavity pressure and varying process factors;
FIG. 7 illustrates a graphical example of conventional injection molding processes carried out for molten thermoplastic materials of different viscosities, whereby all of the conventional molding processes are controlled based on the same calculated plastic melt pressure which is in turn based on the injection pressure, thereby resulting in varying cavity pressures (some of which are suboptimal);
FIG. 8 illustrates a graphical example of substantially low constant pressure injection molding processes carried out for molten thermoplastic materials of different viscosities, whereby all of the substantially low constant pressure molding processes are controlled based on the same calculated plastic melt pressure which is in turn based on the injection pressure, thereby resulting in varying cavity pressures (some of which are suboptimal);
FIG. 9 illustrates a graphical example of conventional injection molding processes carried out for molten thermoplastic materials of different viscosities, whereby all of the conventional molding processes are controlled based on real time cavity pressure, thereby resulting in optimal cavity pressure for all viscosities despite variations in actual melt pressures and injection pressures for each process;
FIG. 10 illustrates a graphical example of substantially low constant pressure injection molding processes carried out for molten thermoplastic materials of different viscosities, whereby all of the substantially low constant pressure injection molding processes are controlled based on real time cavity pressure, thereby resulting in optimal cavity pressure for all viscosities despite variations in actual melt pressures and injection pressures for each process;
FIG. 11 illustrates an exemplary method for controlling an injection molding process based upon an actual plastic melt pressure;
FIG. 12 illustrates an exemplary method for controlling an injection molding process based upon an plastic melt pressure setpoint adjusted using a cavity pressure; and
FIG. 13 illustrates an exemplary method for controlling an injection molding process using real time cavity pressure.

### DETAILED DESCRIPTION

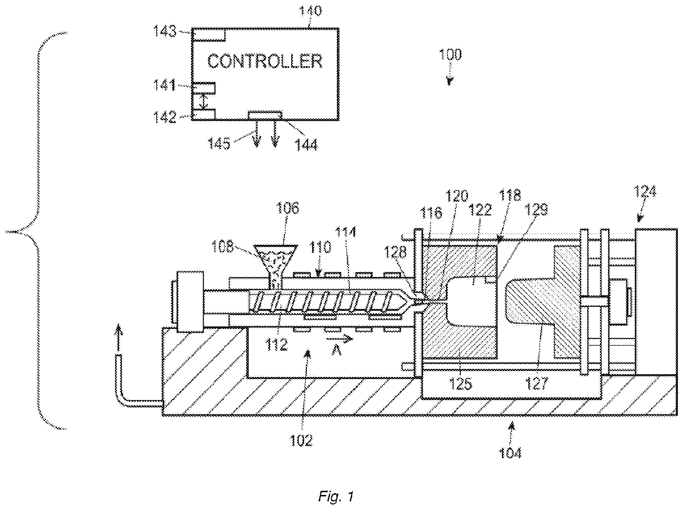

Turning to the drawings, an injection molding process is herein described. The approaches described herein may be suitable for electric presses, servo-hydraulic presses, hydraulic presses, and other known machines. As illustrated in FIG. 1, the injection molding machine 100 includes an injection unit 102 and a clamping system 104. The injection unit 102 includes a hopper 106 adapted to accept material in the form of pellets 108 or any other suitable form. In many of these examples, the pellets 108 may be a polymer or polymer-based material. Other examples are possible.

The hopper 106 feeds the pellets 108 into a heated barrel 110 of the injection unit 102. Upon being fed into the heated barrel 110, the pellets 108 may be driven to the end of the heated barrel 110 by a reciprocating screw 112. The heating of the heated barrel 110 and the compression of the pellets 108 by the reciprocating screw 112 causes the pellets 108 to melt, thereby forming a molten plastic material 114. The molten plastic material 114 is typically processed at a temperature selected within a range of about 130°C to about 410°C (with manufacturers of particular polymers typically providing injection molders with recommended temperature ranges for given materials).

The reciprocating screw 112 advances forward from a first position 112a to a second position 112b and forces the molten plastic material 114 toward a nozzle 116 to form a shot of plastic material that will ultimately be injected into a mold cavity 122 of a mold 118 via one or more gates 120 which direct the flow of the molten plastic material 114 to the mold cavity 122. In other words, the reciprocating screw 112 is driven to exert a force on the molten plastic material 114. In other embodiments, the nozzle 116 may be separated from one or more gates 120 by a feed system (not illustrated). The mold cavity 122 is formed between the first and second mold sides 125, 127 of the mold 118 and the first and second mold sides 125, 127 are held together under pressure via a press or clamping unit 124.

The press or clamping unit 124 applies a predetermined clamping force during the molding process which is greater than the force exerted by the injection pressure acting to separate the two mold halves 125, 127, thereby holding together the first and second mold sides 125, 127 while the molten plastic material 114 is injected into the mold cavity 122. To support these clamping forces, the clamping system 104 may include a mold frame and a mold base, in addition to any other number of components, such as a tie bar.

Once the shot of molten plastic material 114 is injected into the mold cavity 122, the reciprocating screw 112 halts forward movement. The molten plastic material 114 takes the form of the mold cavity 122 and cools inside the mold 118 until the plastic material 114 solidifies. Upon solidifying, the press 124 releases the first and second mold sides 115, 117, which are then separated from one another. The finished part may then be ejected from the mold 118. The mold 118 may include any number of mold cavities 122 to increase overall production rates. The shapes and/or designs of the cavities may be identical, similar to, and/or different from each other. For instance, a family mold may include cavities of related component parts intended to mate or otherwise operate with one another. In some forms, an "injection cycle" is defined as of the steps and functions performed between commencement of injection and ejection. Upon completion of the injection cycle, a recovery profile is commenced during which the reciprocating screw 112 returns to the first position 112a.

The injection molding machine 100 also includes a controller 140 communicatively coupled with the machine 100 via connection 145. The connection 145 may be any type of wired and/or wireless communications protocol adapted to transmit and/or receive electronic signals. In these examples, the controller 140 is in signal communication with at least one sensor, such as, for example, sensor 128 located in or near the nozzle 116 and/or a sensor 129 located in or near the mold cavity 122. In some examples, the sensor 128 is located at a leading end of the screw 112 and the sensor 129 is located in a manifold or a runner of the injection machine 100. Alternatively, the sensor 128 may be located at any position ahead of the check ring of the screw 112. It is understood that any number of additional real and/or virtual sensors capable of sensing any number of characteristics of the mold 118 and/or the machine 100 may be used and placed at desired locations of the machine 100. As a further example, any type of sensor capable of detecting flow front progression in the mold cavity 122 may be used.

The controller 140 can be disposed in a number of positions with respect to the injection molding machine 100. As examples, the controller 140 can be integral with the machine 100, contained in an enclosure that is mounted on the machine, contained in a separate enclosure that is positioned adjacent or proximate to the machine, or can be positioned remote from the machine. In some embodiments, the controller 140 can partially or fully control functions of the machine via wired and/or wired signal communications as known and/or commonly used in the art.

The sensor 128 may be any type of sensor adapted to measure (either directly or indirectly) one or more characteristics of the molten plastic material 114 and/or portions of the machine 100. The sensor 128 may measure any characteristics of the molten plastic material 114 that are known and used in the art, such as, for example, a back pressure, temperature, viscosity, flow rate, hardness, strain, optical characteristics such as translucency, color, light refraction, and/or light reflection, or any one or more of any number of additional characteristics which are indicative of these. The sensor 128 may or may not be in direct contact with the molten plastic material 114. In some examples, the sensor 128 may be adapted to measure any number of characteristics of the injection molding machine 100 and not just those characteristics pertaining to the molten plastic material 114. As an example, the sensor 128 may be a pressure transducer that measures a melt pressure (during the injection cycle) and/or a back pressure (during the extrusion profile and/or recovery profile) of the molten plastic material 114 at the nozzle 116.

As previously noted, the sensor 128 may measure a back pressure exerted on the screw 112, but unlike in conventional systems where back pressure is measured on a trailing end of the screw 112, in the present approaches, back pressure is measured on a leading end of the screw 112. This positioning allows the sensor 128 to accurately measure the compressive pressure on the molten plastic material 114 as compared to measurements obtained at the trailing end of the screw 112 due to the compressible nature of the molten plastic material 114, draw in the barrel, and other factors.

The sensor 128 generates a signal which is transmitted to an input of the controller 140. If the sensor 128 is not located within the nozzle 116, the controller 140 can be set, configured, and/or programmed with logic, commands, and/or executable program instructions to provide appropriate correction factors to estimate or calculate values for the measured characteristic in the nozzle 116. For example, as previously noted, the sensor 128 may be programmed to measure a back pressure during a recovery profile. The controller 140 may receive these measurements and may translate the measurements to other characteristics of the molten plastic material 114, such as a viscosity value.

Similarly, the sensor 129 may be any type of sensor adapted to measure (either directly or indirectly) one or more characteristics of the molten plastic material 114 to detect its presence and/or condition in the mold cavity 122. In various embodiments, the sensor 129 may be located at or near an end-of-fill position in the mold cavity 122. The sensor 129 may measure any number of characteristics of the molten plastic material 114 and/or the mold cavity 122 that are known in the art, such as pressure, temperature, viscosity, flow rate, hardness, strain, optical characteristics such as translucency, color, light refraction, and/or light reflection, and the like, or any one or more of any number of additional characteristics indicative of these. The sensor 129 may or may not be in direct contact with the molten plastic material 114. As an example, the sensor 129 may be a pressure transducer that measures a cavity pressure of the molten plastic material 114 within the cavity 122. The sensor 129 generates a signal which is transmitted to an input of the controller 140. Any number of additional sensors may be used to sense and/or measure operating parameters.

The controller 140 is also in signal communication with a screw control 126. In some embodiments, the controller 140 generates a signal which is transmitted from an output of the controller 140 to the screw control 126. The controller 140 can control any number of characteristics of the machine, such as injection pressures (by controlling the screw control 126 to advance the screw 112 at a rate which maintains a desired value corresponding to the molten plastic material 114 in the nozzle 116), barrel temperatures, clamp closing and/or opening speeds, cooling time, inject forward time, overall cycle time, pressure set points, ejection time, screw recovery speed, back pressure values exerted on the screw 112, and screw velocity.

The signal or signals from the controller 140 may generally be used to control operation of the molding process such that variations in material viscosity, mold temperatures, melt temperatures, and other variations influencing filling rate are taken into account by the controller 140. Alternatively or additionally, the controller 140 may make necessary adjustments in order to control for material characteristics such as volume and/or viscosity. Adjustments may be made by the controller 140 in real time or in near-real time (that is, with a minimal delay between sensors 128, 129 sensing values and changes being made to the process), or corrections can be made in subsequent cycles. Furthermore, several signals derived from any number of individual cycles may be used as a basis for making adjustments to the molding process. The controller 140 may be connected to the sensors 128, 129, the screw control 126, and or any other components in the machine 100 via any type of signal communication approach known in the art.

The controller 140 includes software 141 adapted to control its operation, any number of hardware elements 142 (such as, for example, a non-transitory memory module and/or processors), any number of inputs 143, any number of outputs 144, and any number of connections 145. The software 141 may be loaded directly onto a non-transitory memory module of the controller 140 in the form of a non-transitory computer readable medium, or may alternatively be located remotely from the controller 140 and be in communication with the controller 140 via any number of controlling approaches. The software 141 includes logic, commands, and/or executable program instructions which may contain logic and/or commands for controlling the injection molding machine 100 according to a mold cycle. The software 141 may or may not include an operating system, an operating environment, an application environment, and/or a user interface.

In some arrangements, the controller 50 applies a machine learning algorithm via the software 141. For example, in some implementations, performance of a plurality of injection cycles is monitored for a plurality of different injection molding machines, mold, and molten materials. This historical data can be used as an input to train the machine learning algorithm to correlate the characteristics of the injection molding machine, mold, and/or molten material, the optimal actual plastic melt pressure curve used with such machines, molds, and/or molten materials, and a measured result (such as part quality), and then implement an alteration to the optimal actual plastic melt pressure curve for such a machine, mold, and/or molten material that will result in an improved measured result. As another example, in some implementations, performance of a plurality of injection cycles is monitored for a plurality of different injection molding machines, mold, and molten materials. This historical data can be used as an input to train the machine learning algorithm to correlate the characteristics of the injection molding machine, mold, and/or molten material, the performance factor used with such machines, molds, and/or molten materials, and a measured result (such as part quality), and then determine an optimized process factor for such a machine, mold, and/or molten material that will result in an improved measured result.

The hardware 142 uses the inputs 143 to receive signals, data, and information from the injection molding machine being controlled by the controller 140. The hardware 142 uses the outputs 144 to send signals, data, and/or other information to the injection molding machine. The connection 145 represents a pathway through which signals, data, and information can be transmitted between the controller 140 and its injection molding machine 100. In various embodiments this pathway may be a physical connection or a non-physical communication link that works analogous to a physical connection, direct or indirect, configured in any way described herein or known in the art. In various embodiments, the controller 140 can be configured in any additional or alternate way known in the art.

The connection 145 represents a pathway through which signals, data, and information can be transmitted between the controller 140 and the injection molding machine 100. In various embodiments, these pathways may be physical connections or non-physical communication links that work analogously to either direct or indirect physical connections configured in any way described herein or known in the art. In various embodiments, the controller 140 can be configured in any additional or alternate way known in the art.

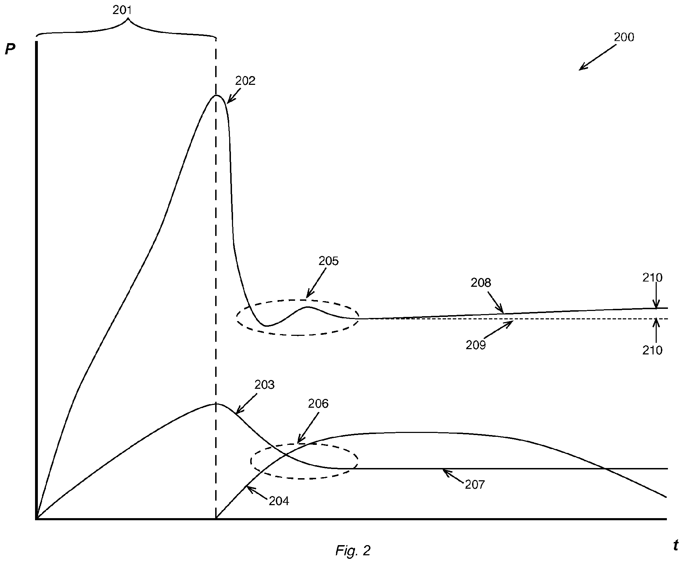

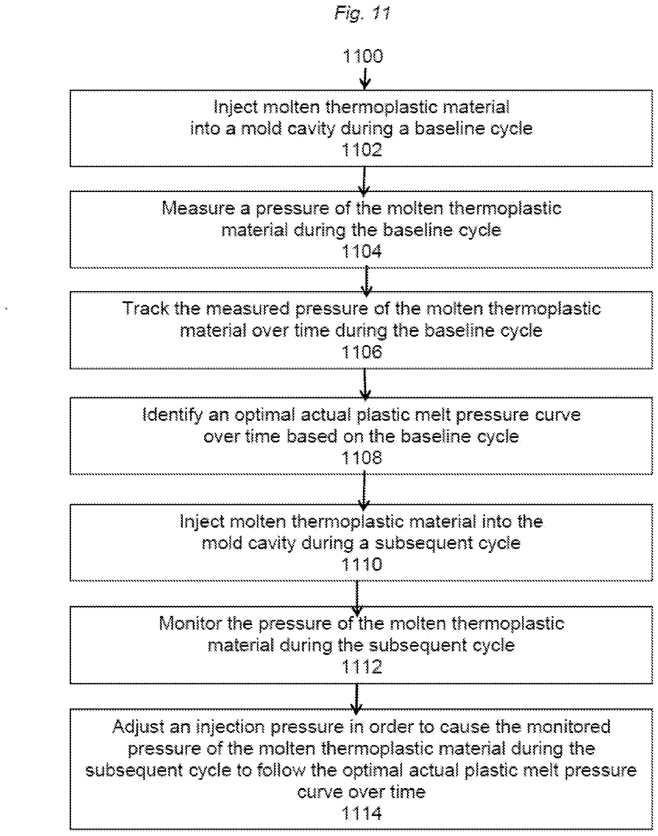

FIGS. 2-4 provide the rationale for the disclosed method for controlling an injection molding process based upon an actual plastic melt pressure, and FIG. 11 illustrates the method for controlling an injection molding process based upon an actual plastic melt pressure itself. As illustrated in FIG. 2, an example injection cycle graph 200 of an injection molding machine 100 is depicted for a conventional injection molding process, such as that commonly used in the prior art. The injection phase is shown at 201, while the pack and hold phase is shown at 202. The actual or virtual cavity pressure 204 is shown in the pack and hold phase 202. The injection pressure 203 is used to control the injection molding process during the pack and hold phase 202. Because the injection pressure 203 is used to control the injection molding process, the injection pressure 203 does not fluctuate as circled at 206, whereas the actual plastic melt pressure 208 does fluctuate as circled at 205 due to pressure losses and compensation. The injection pressure 203 is eventually maintained at a constant level, as shown at 207. The desired plastic melt pressure 209 is illustrated as a dotted line. Over time, the actual plastic melt pressure 208 diverges from the desired plastic melt pressure 209 resulting in an overall variation shown at 210. This can result in lower quality and consistency parts.

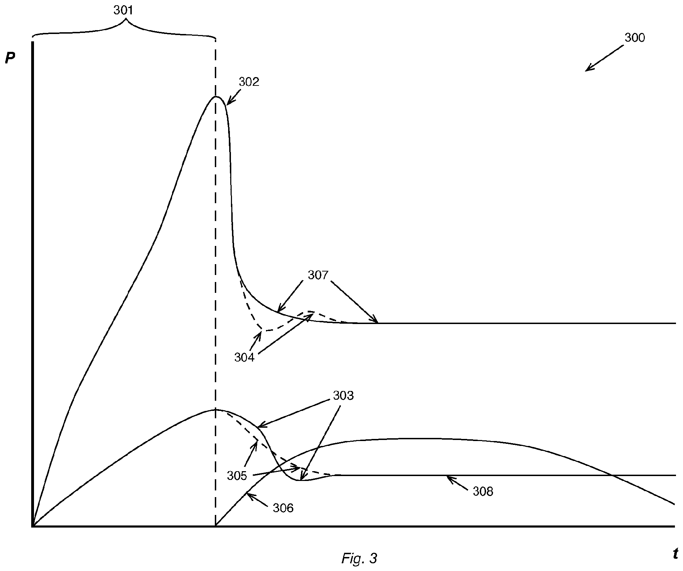

As illustrated in FIG. 3, an example injection cycle graph 300 of an injection molding machine 100 is depicted for a preferred conventional injection molding process. After the fill 301 portion of the injection, plastic melt pressure control is used during the pack 302 and hold 307 phases using readings from sensors 128,129 which are adapted to measure plastic melt pressure in addition to the controller 140. The injection pressure 303 fluctuates to maintain a plastic pressure setpoint and then approaches a more constant injection pressure 308. In contrast, a standard injection pressure curve 305 (such as that discussed with respect to FIG. 2) is illustrated by a dotted line with the resulting plastic melt pressure response 304 also illustrated using a dotted line for comparison. A cavity pressure curve 306 is generated as a result of the pack and hold pressures exerted on the plastic within the mold cavity 122. The plastic melt pressure profile 302,307 may be stored in the software 141.

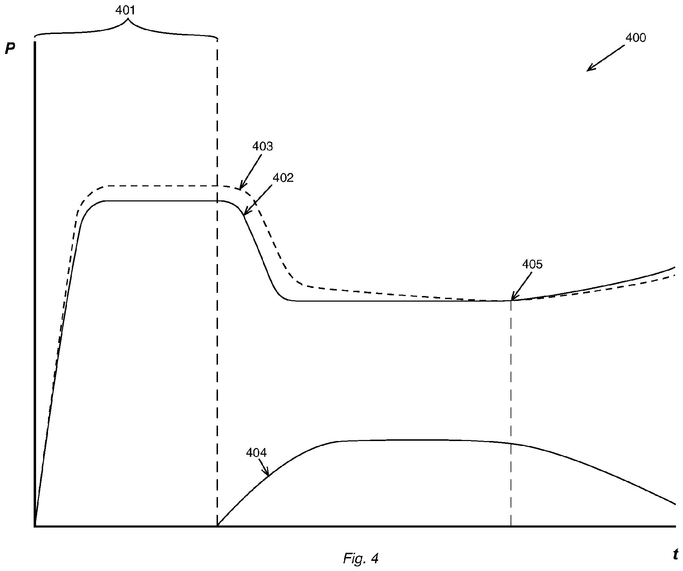

As illustrated in FIG. 4, an example injection cycle graph 400 of an injection molding machine 100 is depicted for a preferred substantially low constant pressure injection molding process. The injection phase is shown at 401. The actual melt pressure during the pack hold phase is shown at 402. The estimated melt pressure during the pack hold phase is shown at 403. The actual or virtual cavity pressure is shown at 404. The actual melt pressure 402 and the estimate melt pressure 403 differ, though the actual melt pressure 402 does equal the estimated melt pressure 403 as shown at 405 as the actual or virtual cavity pressure 404 drops.

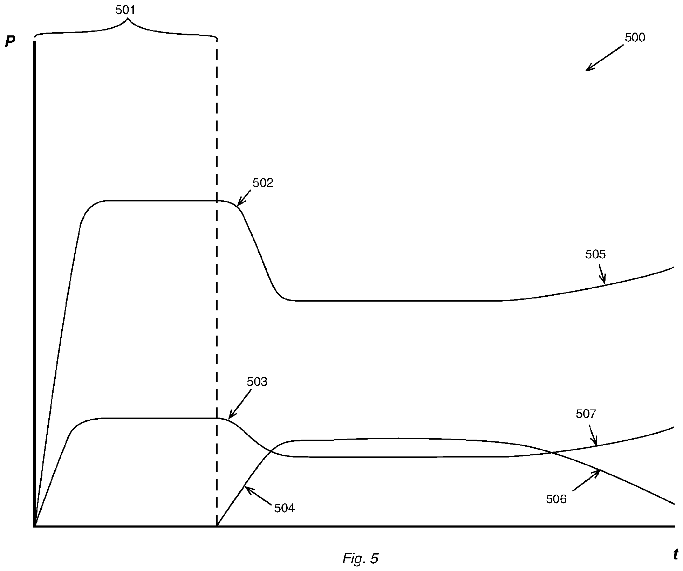

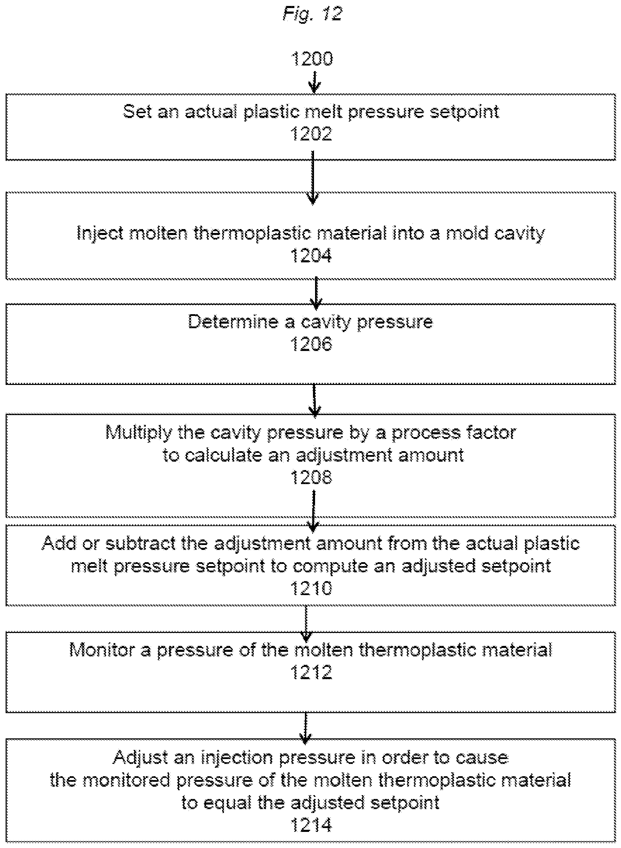

FIGS. 5-6 provide graphical explanations of a method for controlling an injection molding process based upon an plastic melt pressure setpoint adjusted using a cavity pressure, and FIG. 12 illustrates the method for controlling an injection molding process based upon an plastic melt pressure setpoint adjusted using a cavity pressure itself. As illustrated in FIG. 5, an example injection cycle graph 500 of an injection molding machine 100 is depicted for a substantially low constant pressure injection molding process. After the fill 501 portion of the injection, plastic melt pressure control is used during the pack 502 and hold 505 phases using readings from sensors 128,129 which are adapted to measure plastic melt pressure in addition to the controller 140. An algorithm is used which includes cavity pressure readings 504,506 along with a variable described as Process Factor A (=1 for this example). The resultant injection pressure 503, 507 is generated to maintain the plastic melt pressure profile setpoint calculated by the algorithm. The plastic melt pressure profile 502,505, Process Factor A and algorithm may be stored in the software 141.

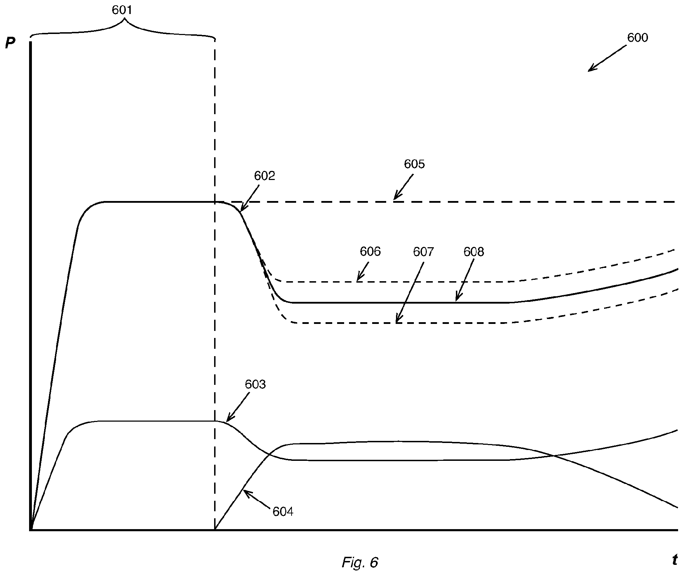

As illustrated in FIG. 6, an example injection cycle graph 600 of an injection molding machine 100 is depicted for a substantially low constant pressure injection molding process. After the fill 601 portion of the injection, plastic melt pressure control is used during the pack 602 and hold 605, 606, 607,608 phases using readings from sensors 128,129 which are adapted to measure plastic melt pressure in addition to the controller 140. Hold pressure profile 605 is a depiction of a Process Factor A value of zero. Hold pressure profile 606 is a depiction of a Process Factor A value of 0.75. Hold pressure profile 607 is a depiction of a Process Factor A value of 1.25. Hold pressure profile 608 is a depiction of a Process Factor A value of 1. An algorithm is used which includes cavity pressure readings 604 along with a variable described as Process Factor A (=1 for this example). The resultant injection pressure 603 is generated to maintain the plastic melt pressure profile setpoint calculated by the algorithm. The plastic melt pressure profile 602,608, Process Factor A and algorithm may be stored in the software 141.

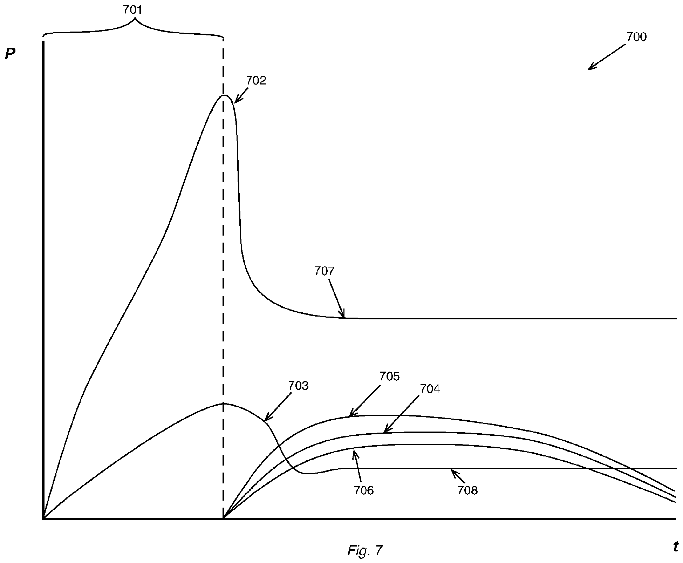

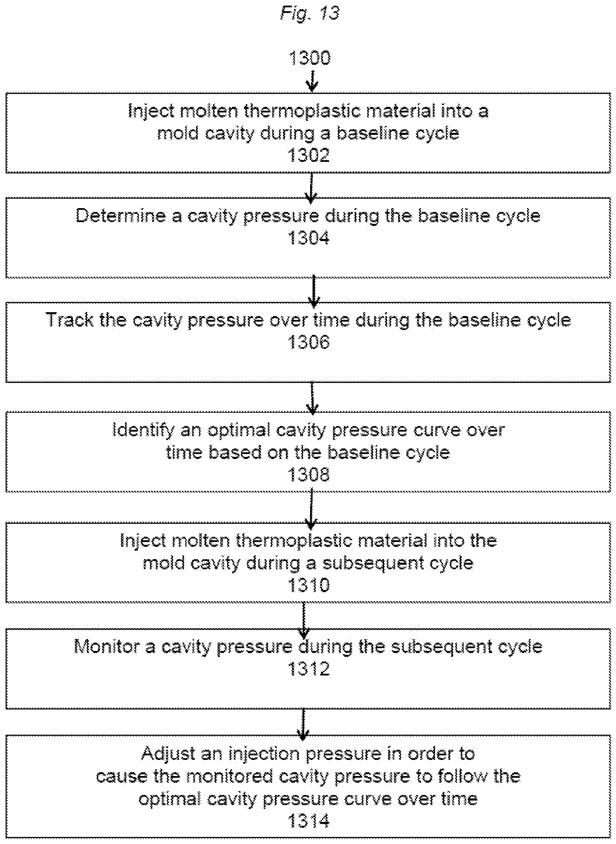

FIGS. 7-10 provide the rationale behind a method for controlling an injection molding process using real time cavity pressure, and FIG. 13 illustrates the method for controlling an injection molding process using real time cavity pressure itself. As illustrated in FIG. 7, an example injection cycle graph 700 of an injection molding machine 100 is depicted for a conventional injection molding process. After the fill 701 portion of the injection, plastic melt pressure control is used during the pack 702 and hold 707 phases using readings from sensors 128,129 which are adapted to measure plastic melt pressure in addition to the controller 140. The injection pressure 703 fluctuates to maintain a plastic pressure setpoint and then approaches a more constant injection pressure 708. Cavity pressure curves 704, 705, 706 are generated as a result of the same pack and hold pressures exerted on the plastic within the mold cavity 122 but with different material viscosities. A nominal (and optimal) viscosity material is depicted by cavity pressure curve 704, with a lower viscosity material generating a cavity pressure curve 705 and a higher viscosity material generating a cavity pressure curve 706. The plastic melt pressure profile 702, 707 may be stored in the software 141. In essence, because the injection pressure 703 is controlling the injection molding process, not all viscosity materials are generating the optimal cavity pressure curve 704. As a result, the lower viscosity materials and the higher viscosity materials are likely to generate parts having less consistency and accuracy.

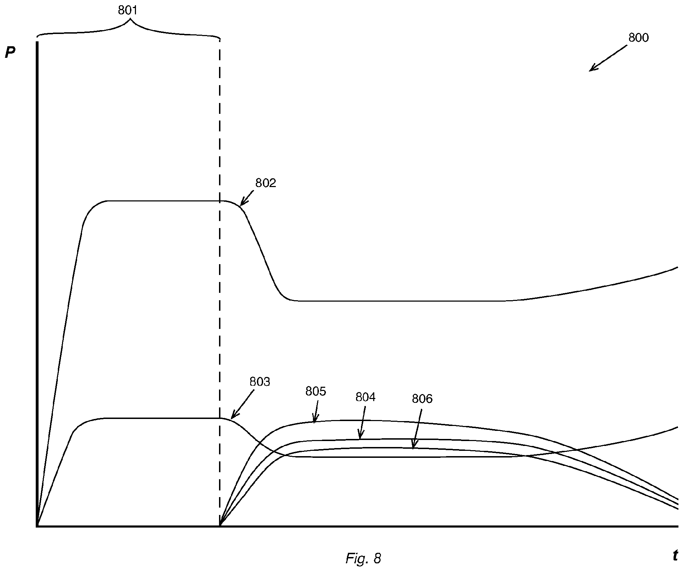

As illustrated in FIG. 8, an example injection cycle graph 800 of an injection molding machine 100 is depicted for a substantially low constant pressure injection molding process. After the fill 801 portion of the injection, plastic melt pressure control is used during the pack and hold 802 phases using readings from sensors 128,129 which are adapted to measure plastic melt pressure in addition to the controller 140. The injection pressure 803 results to maintain a plastic pressure setpoint. Cavity pressure curves 804, 805, 806 are generated as a result of the same pack and hold pressures exerted on the plastic within the mold cavity 122 but with different material viscosities. A nominal (and optimal) viscosity material is depicted by cavity pressure curve 804, with a lower viscosity material generating a cavity pressure curve 805 and a higher viscosity material generating a cavity pressure curve 806. The plastic melt pressure profile 802 may be stored in the software 141. In essence, because the injection pressure 803 is controlling the injection molding process, not all viscosity materials are generating the optimal cavity pressure curve 804. As a result, the lower viscosity materials and the higher viscosity materials are likely to generate parts having less consistency and accuracy.

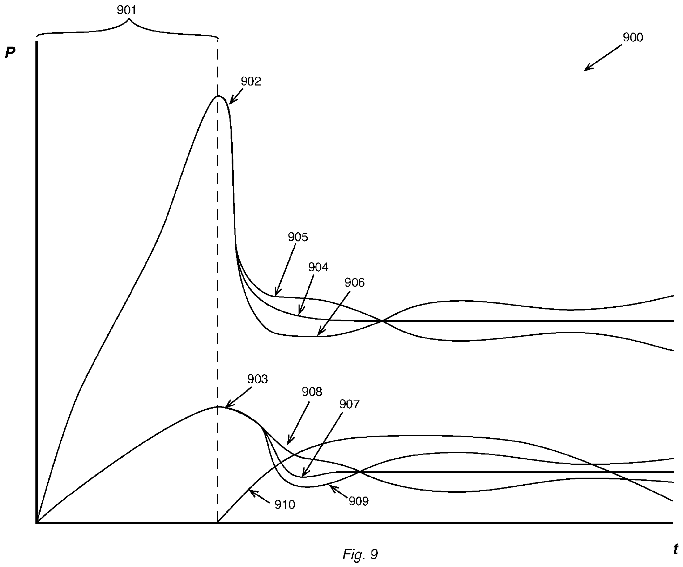

As illustrated in FIG. 9, an example injection cycle graph 900 of an injection molding machine 100 is depicted for a conventional injection molding process. After the fill 901 portion of the injection, plastic melt pressure control is used during the pack 902 and hold 904, 905, 906 phases using readings from sensors 128,129 which are adapted to measure plastic melt pressure in addition to the controller 140 to maintain a cavity pressure setpoint 910. The injection pressure 903, 907, 908, 909 fluctuates to maintain a plastic pressure required to maintain the cavity pressure setpoint. Plastic melt pressure curves 904, 905, 906 are generated as a result of changing pack and hold pressures exerted on the plastic within the mold cavity 122 to maintain a cavity pressure setpoint 910 with different material viscosities. A nominal viscosity material is depicted by plastic melt pressure curve 904 with a resulting injection pressure curve 907. A lower viscosity material is depicted by plastic melt pressure curve 905 with a resulting injection pressure curve 908. A higher viscosity material is depicted by plastic melt pressure curve 906 with a resulting injection pressure curve 909. The cavity pressure profile 910 may be stored in the software 141. In essence, because the cavity pressure setpoint 910 is controlling the injection molding process, all viscosity materials are generating the optimal cavity pressure curve 910 even though variations are occurring with the plastic melt pressure curves 904, 905, and 906 and the injection pressure curves 907, 908, 909. As a result, parts made by materials of all viscosities are more likely to be consistent and high quality.

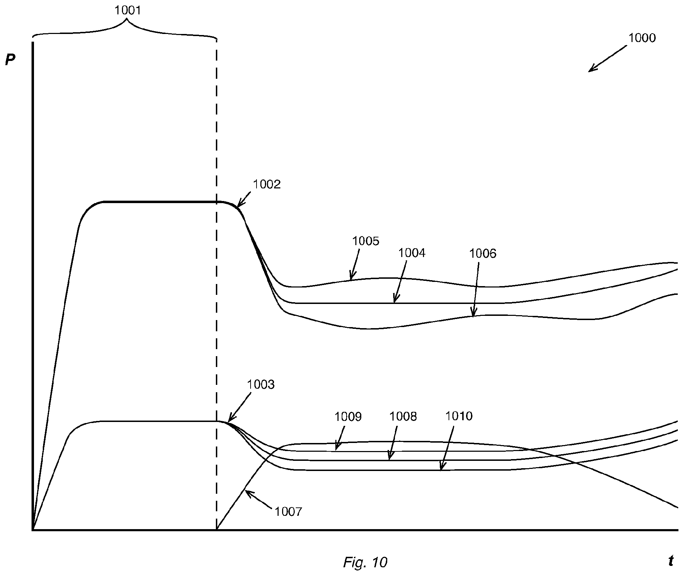

As illustrated in FIG. 10, an example injection cycle graph 1000 of an injection molding machine 100 is depicted for a substantially low constant pressure injection molding process. After the fill 1001 portion of the injection, plastic melt pressure control is used during the pack 1002 and hold 1004, 1005, 1006 phases using readings from sensors 128,129 which are adapted to measure plastic melt pressure in addition to the controller 140 to maintain a cavity pressure setpoint 1007. The injection pressure 1003, 1008, 1009, 1010 fluctuates to maintain a plastic pressure required to maintain the cavity pressure setpoint. Plastic melt pressure curves 1004, 1005, 1006 are generated as a result of changing pack and hold pressures exerted on the plastic within the mold cavity 122 to maintain a cavity pressure setpoint 1007 with different material viscosities. A nominal viscosity material is depicted by plastic melt pressure curve 1004 with a resulting injection pressure curve 1008. A lower viscosity material is depicted by plastic melt pressure curve 1005 with a resulting injection pressure curve 1009. A higher viscosity material is depicted by plastic melt pressure curve 1006 with a resulting injection pressure curve 1010. The cavity pressure profile 1007 may be stored in the software 141. In essence, because the cavity pressure setpoint 1007 is controlling the injection molding process, all viscosity materials are generating the optimal cavity pressure curve 1007 even though variations are occurring with the plastic melt pressure curves 1004, 1005, and 1006 and the injection pressure curves 1008, 1009, 1010. As a result, parts made by materials of all viscosities are more likely to be consistent and high quality.

FIG. 11 illustrates method 1100 for controlling an injection molding process based upon an actual plastic melt pressure. At box 1102, the method includes injecting molten thermoplastic material into a mold cavity during a baseline cycle. At box 1104, the method includes measuring, using a sensor in or near a nozzle, a pressure of the molten thermoplastic material during the baseline cycle. At box 1104, the method includes tracking, by a controller, the measured pressure of the molten thermoplastic material over time during the baseline cycle. At box 1106, the method includes identifying, by the controller, an optimal actual plastic melt pressure curve over time based on the baseline cycle. At box 1108, the method includes injecting molten thermoplastic material into the mold cavity during a subsequent cycle. At box 1110, the method includes monitoring, using the sensor in or near the nozzle, the pressure of the molten thermoplastic material during the subsequent cycle. At box 1112, the method includes adjusting, by the controller, an injection pressure in order to cause the monitored pressure of the molten thermoplastic material during the subsequent cycle to follow the optimal actual plastic melt pressure curve over time.

Although not depicted, the method for controlling an injection molding process based upon an plastic melt pressure setpoint adjusted using a cavity pressure may also be used in a conventional injection molding process. FIG. 12 shows a method 1200 for controlling an injection molding process based upon an plastic melt pressure setpoint adjusted using a cavity pressure. At box 1202, the method includes setting, by a controller, an plastic melt pressure setpoint. At box 1204, the method includes injecting molten thermoplastic material into a mold cavity. At box 1206, the method includes determining, by a calculation performed by the controller or directly by a sensor in or near the mold cavity, a cavity pressure. At box 1208, the method includes multiplying, by the controller, the cavity pressure by a process factor to calculate an adjustment amount. At box 1210, the method includes adding or subtracting, by the controller, the adjustment amount from the actual plastic melt pressure setpoint to compute an adjusted setpoint. At box 1212, the method includes monitoring, using a sensor in or near a nozzle, a pressure of the molten thermoplastic material. At box 1214, the method includes adjusting, by the controller, an injection pressure in order to cause the monitored pressure of the molten thermoplastic material to equal the adjusted setpoint.

FIG. 13 illustrates a method 1300 for controlling an injection molding process using real time cavity pressure. At box 1302, the method includes injecting molten thermoplastic material into a mold cavity during a baseline cycle. At box 1304, the method includes determining, by a calculation performed by a controller or directly by a sensor in or near the mold cavity, a cavity pressure during the baseline cycle. At box 1306, the method includes tracking, by the controller, the cavity pressure over time during the baseline cycle. At box 1308, the method includes identifying, by the controller, an optimal cavity pressure curve over time based on the baseline cycle. At box 1310, the method includes injecting molten thermoplastic material into the mold cavity during a subsequent cycle. At box 1312, the method includes monitoring, by the calculation performed by the controller or directly by the sensor in or near the mold cavity, a cavity pressure during the subsequent cycle. At box 1314, the method includes adjusting, by the controller, an injection pressure in order to cause the monitored cavity pressure to follow the optimal cavity pressure curve over time.

While the invention has been described with respect to certain embodiments, it will be understood that variations may be made that are still considered within the scope of the appended claims.

## Claims

1. A method for controlling an injection molding process based upon an actual plastic melt pressure, the method comprising:
injecting molten thermoplastic material into a mold cavity (122) during a baseline cycle;
measuring, using a sensor (128) in or near a nozzle (116), a pressure of the molten thermoplastic material during the baseline cycle;
tracking, by a controller (140), the measured pressure of the molten thermoplastic material over time during the baseline cycle;
identifying, by the controller (140, an optimal actual plastic melt pressure curve over time based on the baseline cycle;
injecting molten thermoplastic material into the mold cavity (122) during a subsequent cycle;
monitoring, using the sensor (128) in or near the nozzle (116), the pressure of the molten thermoplastic material during the subsequent cycle; and
adjusting in real time or in near-real time, by the controller (140), an injection pressure in order to cause the monitored pressure of the molten thermoplastic material during the subsequent cycle to follow the optimal actual plastic melt pressure curve over time.

2. The method of claim 1, wherein the injection molding process is a conventional injection molding process, and wherein adjusting the injection pressure in order to cause the monitored pressure of the molten thermoplastic material during the subsequent cycle to follow the optimal actual plastic melt pressure curve over time occurs during at least one of a packing or a holding phase of the subsequent cycle.

3. The method of claim 1, wherein the injection molding process is a substantially constant low pressure injection molding process, and wherein adjusting the injection pressure in order to cause the monitored pressure of the molten thermoplastic material during the subsequent cycle to follow the optimal actual plastic melt pressure curve over time occurs during all of the subsequent cycle.

4. The method of any one of claims 1-3, the method further comprising applying a machine learning algorithm to determine an alteration to the optimal actual plastic melt pressure curve.

5. A method for controlling an injection molding process based upon a plastic melt pressure setpoint adjusted using a cavity pressure, the method comprising:
setting, by a controller (140), an actual plastic melt pressure setpoint;
injecting molten thermoplastic material into a mold cavity (122);
determining, by a calculation performed by the controller (140) or directly by a sensor (129) in or near the mold cavity (122), a cavity pressure;
multiplying, by the controller (140), the cavity pressure by a process factor to calculate an adjustment amount;
adding or subtracting, by the controller (140), the adjustment amount from the actual plastic melt pressure setpoint to compute an adjusted setpoint;
monitoring, using a sensor (128) in or near a nozzle (116), a pressure of the molten thermoplastic material; and
adjusting in real time or in near-real time, by the controller (140), an injection pressure in order to cause the monitored pressure of the molten thermoplastic material to equal the adjusted setpoint.

6. The method of claim 5, wherein the injection molding process is a conventional injection molding process, and wherein adjusting an injection pressure in order to cause the monitored pressure of the molten thermoplastic material to equal the adjusted setpoint occurs during at least one of a packing or a holding phase.

7. The method of claim 5, wherein the injection molding process is a substantially low constant pressure injection molding process, and wherein adjusting an injection pressure in order to cause the monitored pressure of the molten thermoplastic material to equal the adjusted setpoint occurs during all phases of an injection molding cycle.

8. The method of any one of claims 5-7, wherein the process factor is equal to 0.

9. The method of any one of claims 5-7, wherein the process factor is less than 0.

10. The method of any one of claims 5-7, wherein the process factor is greater than 0.

11. The method of any one of claims 5-10, the method further comprising applying a machine learning algorithm to determine the process factor.

12. A method for controlling an injection molding process using real time cavity pressure, the method comprising:
injecting molten thermoplastic material into a mold cavity (122) during a baseline cycle;
determining, by a calculation performed by a controller (140) or directly by a sensor (129) in or near the mold cavity (122), a cavity pressure during the baseline cycle;
tracking, by the controller (140), the cavity pressure over time during the baseline cycle;
identifying, by the controller (140), an optimal cavity pressure curve over time based on the baseline cycle;
injecting molten thermoplastic material into the mold cavity (122) during a subsequent cycle;
monitoring, by the calculation performed by the controller (140) or directly by the sensor (129) in or near the mold cavity (122), a cavity pressure during the subsequent cycle; and
adjusting in real time or in near-real time, by the controller (140), an injection pressure in order to cause the monitored cavity pressure to follow the optimal cavity pressure curve over time.

13. The method of claim 12, wherein the injection molding process is a conventional injection molding process, and wherein adjusting, by the controller, the injection pressure in order to cause the monitored cavity pressure to follow the optimal cavity pressure curve over time occurs during at least one of a packing or a holding phase.

14. The method of claim 12, wherein the injection molding process is a substantially low constant pressure injection molding process, and wherein adjusting, by the controller, the injection pressure in order to cause the monitored cavity pressure to follow the optimal cavity pressure curve over time occurs during all phases of an injection molding cycle

## Patentansprüche

1. Verfahren zum Steuern eines Spritzgießprozesses basierend auf einem tatsächlichen Kunststoffschmelzdruck, das Verfahren umfassend:
Spritzen von geschmolzenem thermoplastischem Material in einen Formhohlraum (122) während eines Basiszyklus;
Messen, unter Verwendung eines Sensors (128) in oder nahe einer Düse (116), eines Drucks des geschmolzenen thermoplastischen Materials während des Basiszyklus;
Verfolgen, durch eine Steuervorrichtung (140), des gemessenen Drucks des geschmolzenen thermoplastischen Materials im Laufe der Zeit während des Basiszyklus;
Identifizieren, durch die Steuervorrichtung (140, einer optimalen tatsächlichen Kunststoffschmelzdruckkurve im Laufe der Zeit basierend auf dem Basiszyklus;
Spritzen von geschmolzenem thermoplastischem Material in den Formhohlraum (122) während eines nachfolgenden Zyklus;
Überwachen, unter Verwendung des Sensors (128) in oder nahe der Düse (116), des Drucks des geschmolzenen thermoplastischen Materials während des nachfolgenden Zyklus; und
Anpassen in Echtzeit oder in nahezu Echtzeit, durch die Steuervorrichtung (140), eines Einspritzdrucks, um zu bewirken, dass der überwachte Druck des geschmolzenen thermoplastischen Materials während des nachfolgenden Zyklus der optimalen tatsächlichen Kunststoffschmelzdruckkurve im Laufe der Zeit folgt.

2. Verfahren nach Anspruch 1, wobei der Spritzgießprozess ein herkömmlicher Spritzgießprozess ist und wobei das Anpassen des Einspritzdrucks, um zu bewirken, dass der überwachte Druck des geschmolzenen thermoplastischen Materials während des nachfolgenden Zyklus der optimalen tatsächlichen Kunststoffschmelzdruckkurve im Laufe der Zeit folgt, während mindestens einer von einer Füll- oder einer Haltephase des nachfolgenden Zyklus auftritt.

3. Verfahren nach Anspruch 1, wobei der Spritzgießprozess ein Spritzgießprozess mit im Wesentlichen konstantem niedrigem Druck ist und wobei das Anpassen des Einspritzdrucks, um zu bewirken, dass der überwachte Druck des geschmolzenen thermoplastischen Materials während des nachfolgenden Zyklus der optimalen tatsächlichen Kunststoffschmelzdruckkurve im Laufe der Zeit folgt, während des gesamten nachfolgenden Zyklus auftritt.

4. Verfahren nach einem der Ansprüche 1 bis 3, das Verfahren ferner umfassend ein Anwenden eines Maschinenlemalgorithmus, um eine Änderung der optimalen tatsächlichen Kunststoffschmelzdruckkurve zu bestimmen.

5. Verfahren zum Steuern eines Spritzgießprozesses basierend auf einem Kunststoffschmelzdrucksollwert, der unter Verwendung eines Hohlraumdrucks angepasst wird, das Verfahren umfassend:
Einstellen, durch eine Steuervorrichtung (140), eines tatsächlichen Kunststoffschmelzdrucksollwerts;
Spritzen von geschmolzenem thermoplastischem Material in einen Formhohlraum (122);
Bestimmen, durch eine Berechnung, die durch die Steuervorrichtung (140) oder direkt durch einen Sensor (129) in oder nahe dem Formhohlraum (122) durchgeführt wird, eines Hohlraumdrucks;
Multiplizieren, durch die Steuervorrichtung (140), des Hohlraumdrucks durch einen Prozessfaktor, um einen Anpassungsbetrag zu berechnen;
Addieren oder Subtrahieren, durch die Steuervorrichtung (140), des Anpassungsbetrags von dem tatsächlichen Kunststoffschmelzdrucksollwert, um einen angepassten Sollwert zu errechnen;
Überwachen, unter Verwendung eines Sensors (128) in oder nahe einer Düse (116), eines Drucks des geschmolzenen thermoplastischen Materials; und
Anpassen in Echtzeit oder in nahezu Echtzeit, durch die Steuervorrichtung (140), eines Einspritzdrucks, um zu bewirken, dass der überwachte Druck des geschmolzenen thermoplastischen Materials gleich dem angepassten Sollwert ist.

6. Verfahren nach Anspruch 5, wobei der Spritzgießprozess ein herkömmlicher Spritzgießprozess ist und wobei das Anpassen eines Einspritzdrucks, um zu bewirken, dass der überwachte Druck des geschmolzenen thermoplastischen Materials gleich dem angepassten Sollwert ist, während mindestens einer von einer Füll- oder einer Haltephase auftritt.

7. Verfahren nach Anspruch 5, wobei der Spritzgießprozess ein Spritzgießprozess mit im Wesentlichen niedrigem konstantem Druck ist und wobei das Anpassen eines Einspritzdrucks, um zu bewirken, dass der überwachte Druck des geschmolzenen thermoplastischen Materials gleich dem angepassten Sollwert ist, während allen Phasen eines Spritzgießzyklus auftritt.

8. Verfahren nach einem der Ansprüche 5 bis 7, wobei der Prozessfaktor gleich 0 ist.

9. Verfahren nach einem der Ansprüche 5 bis 7, wobei der Prozessfaktor kleiner als 0 ist.

10. Verfahren nach einem der Ansprüche 5 bis 7, wobei der Prozessfaktor größer als 0 ist.

11. Verfahren nach einem der Ansprüche 5 bis 10, das Verfahren ferner umfassend das Anwenden eines Maschinenlemalgorithmus, um den Prozessfaktor zu bestimmen.

12. Verfahren zum Steuern eines Spritzgießprozesses unter Verwendung eines Echtzeithohlraumdrucks, das Verfahren umfassend:
Spritzen von geschmolzenem thermoplastischem Material in einen Formhohlraum (122) während eines Basiszyklus;
Bestimmen, durch eine Berechnung, die durch eine Steuervorrichtung (140) oder direkt durch einen Sensor (129) in oder in der Nähe des Formhohlraums (122) durchgeführt wird, eines Hohlraumdrucks während des Basiszyklus;
Verfolgen, durch die Steuervorrichtung (140), des Hohlraumdrucks im Laufe der Zeit während des Basiszyklus;
Identifizieren, durch die Steuervorrichtung (140), einer optimalen Hohlraumdruckkurve im Laufe der Zeit basierend auf dem Basiszyklus;
Spritzen von geschmolzenem thermoplastischem Material in den Formhohlraum (122) während eines nachfolgenden Zyklus;
Überwachen, durch die Berechnung, die durch die Steuervorrichtung (140) oder direkt durch den Sensor (129) in oder in der Nähe des Formhohlraums (122) durchgeführt wird, eines Hohlraumdrucks während des nachfolgenden Zyklus; und
Anpassen in Echtzeit oder in nahezu Echtzeit, durch die Steuervorrichtung (140), eines Einspritzdrucks, um zu bewirken, dass der überwachte Hohlraumdruck der optimalen Hohlraumdruckkurve im Laufe der Zeit folgt.

13. Verfahren nach Anspruch 12, wobei der Spritzgießprozess ein herkömmlicher Spritzgießprozess ist und wobei das Anpassen, durch die Steuervorrichtung, des Einspritzdrucks, um zu bewirken, dass der überwachte Hohlraumdruck der optimalen Hohlraumdruckkurve im Laufe der Zeit folgt, während mindestens einer von einer Füll- oder einer Haltephase auftritt.

14. Verfahren nach Anspruch 12, wobei der Spritzgießprozess ein Spritzgießprozess mit im Wesentlichen niedrigem konstantem Druck ist und wobei das Anpassen, durch die Steuervorrichtung, des Einspritzdrucks, um zu bewirken, dass der überwachte Hohlraumdruck der optimalen Hohlraumdruckkurve im Laufe der Zeit folgt, während allen Phasen eines Spritzgießzyklus auftritt.

## Revendications

1. Procédé de commande d'un processus de moulage par injection basé sur une pression réelle d'une matière plastique fondue, le procédé comprenant :
l'injection d'un matériau thermoplastique fondu dans une cavité de moule (122) pendant un cycle de référence ;
la mesure, à l'aide d'un capteur (128) dans ou près d'une buse (116), d'une pression du matériau thermoplastique fondu pendant le cycle de référence ;
le suivi, par un dispositif de commande (140), de la pression mesurée du matériau thermoplastique fondu au fil du temps pendant le cycle de référence ;
l'identification, par le dispositif de commande (140, d'une courbe de pression réelle optimale de matière plastique fondue au fil du temps basée sur le cycle de référence ;
l'injection d'un matériau thermoplastique fondu dans la cavité de moule (122) pendant un cycle ultérieur ;
la surveillance, à l'aide du capteur (128) dans ou près de la buse (116), de la pression du matériau thermoplastique fondu pendant le cycle ultérieur ; et
le réglage en temps réel ou en temps quasi réel, par le dispositif de commande (140), d'une pression d'injection afin d'amener la pression surveillée du matériau thermoplastique fondu pendant le cycle ultérieur à suivre la courbe de pression réelle optimale de matière plastique fondue au fil du temps.

2. Procédé selon la revendication 1, dans lequel le processus de moulage par injection est un processus de moulage par injection classique, et dans lequel le réglage de la pression d'injection afin d'amener la pression surveillée du matériau thermoplastique fondu pendant le cycle ultérieur à suivre la courbe de pression réelle optimale de matière plastique fondue au fil du temps se produit pendant au moins l'une parmi les phases de conditionnement ou de maintien du cycle ultérieur.

3. Procédé selon la revendication 1, dans lequel le processus de moulage par injection est un processus de moulage par injection à faible pression sensiblement constante, et dans lequel le réglage de la pression d'injection afin d'amener la pression surveillée du matériau thermoplastique fondu pendant le cycle ultérieur à suivre la courbe de pression réelle optimale de matière plastique fondue au fil du temps se produit pendant tout le cycle ultérieur.

4. Procédé selon l'une quelconque des revendications 1 à 3, le procédé comprenant en outre l'application d'un algorithme d'apprentissage automatique permettant de déterminer une altération de la courbe de pression réelle optimale de matière plastique fondue.

5. Procédé de commande d'un processus de moulage par injection basé sur une valeur de consigne de pression de matière plastique fondue réglée à l'aide d'une pression de cavité, le procédé comprenant :
le réglage, par un dispositif de commande (140), d'une valeur de consigne de pression réelle de matière plastique fondue ;
l'injection d'un matériau thermoplastique fondu dans une cavité de moule (122) ;
la détermination, par un calcul effectué par le dispositif de commande (140) ou directement par un capteur (129) dans ou près de la cavité de moule (122), d'une pression de cavité ;
la multiplication, par le dispositif de commande (140), de la pression de cavité par un facteur de processus pour calculer une quantité de réglage ;
l'ajout ou la soustraction, par le dispositif de commande (140), de la quantité de réglage à partir de la valeur de consigne de pression réelle de matière plastique fondue pour calculer une valeur de consigne réglée ;
la surveillance, à l'aide d'un capteur (128) dans ou près d'une buse (116), d'une pression du matériau thermoplastique fondu ; et
le réglage en temps réel ou en temps quasi réel, par le dispositif de commande (140), d'une pression d'injection afin d'amener la pression surveillée du matériau thermoplastique fondu à égaler a valeur de consigne réglée.

6. Procédé selon la revendication 5, dans lequel le processus de moulage par injection est un processus de moulage par injection classique, et dans lequel le réglage d'une pression d'injection afin d'amener la pression surveillée du matériau thermoplastique fondu à égaler la valeur de consigne réglée se produit pendant au moins l'une parmi les phases de conditionnement ou de maintien.

7. Procédé selon la revendication 5, dans lequel le processus de moulage par injection est un processus de moulage par injection à pression constante sensiblement faible, et dans lequel le réglage d'une pression d'injection afin d'amener la pression surveillée du matériau thermoplastique fondu à égaler la valeur de consigne réglée se produit pendant toutes les phases d'un cycle de moulage par injection.

8. Procédé selon l'une quelconque des revendications 5 à 7, dans lequel le facteur de processus est égal à 0.

9. Procédé selon l'une quelconque des revendications 5 à 7, dans lequel le facteur de processus est inférieur à 0.

10. Procédé selon l'une quelconque des revendications 5 à 7, dans lequel le facteur de processus est supérieur à 0.

11. Procédé selon l'une quelconque des revendications 5 à 10, le procédé comprenant en outre l'application d'un algorithme d'apprentissage automatique permettant de déterminer le facteur de processus.

12. Procédé de commande d'un processus de moulage par injection à l'aide d'une pression de cavité en temps réel, le procédé comprenant :
l'injection d'un matériau thermoplastique fondu dans une cavité de moule (122) pendant un cycle de référence ;
la détermination, par un calcul effectué par un dispositif de commande (140) ou directement par un capteur (129) dans ou près de la cavité de moule (122), d'une pression de cavité pendant le cycle de référence ;
le suivi, par le dispositif de commande (140), de la pression de cavité au fil du temps pendant le cycle de référence ;
l'identification, par le dispositif de commande (140), d'une courbe de pression optimale de cavité au fil du temps basée sur le cycle de référence ;
l'injection d'un matériau thermoplastique fondu dans la cavité de moule (122) pendant un cycle ultérieur ;
la surveillance, par le calcul effectué par le dispositif de commande (140) ou directement par le capteur (129) dans ou près de la cavité de moule (122), d'une pression de cavité pendant le cycle ultérieur ; et
le réglage en temps réel ou en temps quasi réel, par le dispositif de commande (140), d'une pression d'injection afin d'amener la pression de cavité surveillée à suivre la courbe de pression optimale de cavité au fil du temps.

13. Procédé selon la revendication 12, dans lequel le processus de moulage par injection est un processus de moulage par injection classique, et dans lequel le réglage, par le dispositif de commande, de la pression d'injection afin d'amener la pression de cavité surveillée à suivre la courbe de pression optimale de cavité au fil du temps se produit pendant au moins l'une parmi les phases de conditionnement ou de maintien.

14. Procédé selon la revendication 12, dans lequel le processus de moulage par injection est un processus de moulage par injection à pression constante sensiblement faible, et dans lequel le réglage, par le dispositif de commande, de la pression d'injection afin d'amener la pression de cavité surveillée à suivre la courbe de pression optimale de cavité au fil du temps se produit pendant toutes les phases d'un cycle de moulage par injection
